# EUROPÄISCHE PATENTSCHRIFT

(11) **EP 3 500 424 B1**
(45) Veröffentlichungstag und Bekanntmachung des Hinweises auf die Patenterteilung: **12.06.2024**
(21) Anmeldenummer: 18743778.5
(22) Anmeldetag: 19.07.2018
(51) Int. Cl.: B30B 15/28, F16P 3/08, F16P 3/00

(54) **TRENNENDE SCHUTZEINRICHTUNG**
SEPARATING PROTECTIVE DEVICE
DISPOSITIF DE PROTECTION SÉPARANT

(30) Priorität: 27.07.2017 DE 102017116990
(43) Veröffentlichungstag der Anmeldung: 26.06.2019
(73) Patentinhaber: Gebr. Schmidt Fabrik für Feinmechanik GmbH & Co. KG, 78112 St. Georgen (DE)
(72) Erfinder: MEYER, Andreas Leo, 78120 Furtwangen (DE)
(74) Vertreter: Witte, Weller & Partner Patentanwälte mbB
(86) Internationale Anmeldenummer: PCT/EP2018/069682
(87) Internationale Veröffentlichungsnummer: WO 2019/020496

(56) Entgegenhaltungen:
- EP-A2- 2 460 966
- DE-A1- 2 522 282
- DE-A1- 2 825 603
- DE-T2- 69 403 485
- DE-U1- 20 021 206
- GB-A- 583 762
- GB-A- 596 055
- JP-A- H04 294 997
- JP-A- H11 300 421

## Beschreibung

Die vorliegende Erfindung betrifft eine trennende Schutzeinrichtung zum Absichern einer gefährlichen Maschine, insbesondere zum Absichern einer Presse. Die vorliegende Erfindung betrifft darüber hinaus eine Presse mit einer solchen trennenden Schutzeinrichtung.

Beispielhafte trennende Schutzeinrichtung sind aus der DE 694 03 485 T2 bekannt. EP 2 460 966 A2 offenbart eine Schutzeinrichtung gemäss dem Oberbegriff des Anspruchs 1. Aus der DE 25 22 282 A1 ist ferner eine Handschutzvorrichtung für kraftbetätigte Arbeitsmaschinen bekannt.

Es ist üblich, gefährliche Maschinen, wie etwa eine Presse, eine Dreh-, Fräs- und/oder Bohrmaschine, eine Schleifmaschine etc., mit Hilfe von sogenannten trennenden Schutzeinrichtungen gemäß der internationalen Norm DIN EN ISO 14120 abzusichern. Solche trennenden Schutzeinrichtungen weisen üblicherweise eine Schutzabdeckung auf, welche einen unkontrollierten Eingriff in den gefährlichen Arbeitsbereich von außen verhindert. Der Begriff "Schutzabdeckung" ist vorliegend allgemein zu verstehen. Darunter fällt jegliche Art von physischer Barriere, also beispielsweise ein Gehäuse, ein Schild, eine Haube, eine Tür, eine Wand oder ein sonstiges Verkleidungselement.

Häufig ist aber ein kontrollierter Zugang zu dem Arbeitsbereich der Maschine notwendig, beispielsweise um ein neues Werkstück zur Bearbeitung in die Maschine einzuspannen, um einen Bearbeitungsvorgang einzurichten oder um einen Fehler zu beheben. Dementsprechend sind viele dieser trennenden Schutzeinrichtungen als bewegliche trennende Schutzeinrichtungen ausgestaltet, welche den Zugang zu dem Arbeitsbereich der Maschine durch Bewegung bzw. Öffnen der Schutzabdeckung ermöglichen. Meist ist in diesem Fall die Schutzabdeckung mit einem oder mehreren Sicherheitsschaltern versehen, welche ein Freigabesignal für den Arbeitsbetrieb der Maschine erst dann erzeugen, wenn die Schutzabdeckung geschlossen ist. Solang die Schutzabdeckung geöffnet ist, ist eine Inbetriebnahme der Maschine nicht möglich, so dass ein gefahrenfreier Zugang zu der Maschine gewährleistet ist.

Als Alternative zu trennenden Schutzeinrichtungen mit physischen Barrieren werden häufig auch berührungslos wirkende Schutzeinrichtungen, wie beispielsweise Lichtschranken oder Lichtgitter, eingesetzt. Je nach abzusichernder Maschine müssen hierbei jedoch unterschiedliche Sicherheitsabstände zwischen Schutzeinrichtung und Gefahrenstelle der Maschine eingehalten werden. Je größer die Geschwindigkeit der Gefahrenstelle der Maschine ist, desto größer muss der Sicherheitsabstand gewählt werden. Dies kann zu einer nicht ergonomischen Arbeitssituation führen, da die Bearbeitungsstelle, welche von Hand zugänglich sein muss, unter Umständen sehr weit von der Schutzeinrichtung entfernt ist. Ein weiterer Nachteil solcher berührungslos wirkenden Schutzeinrichtungen ist der mangelnde Schutz vor prozessbedingter Splitterbildung durch Späne, Projektile oder sonstige Abfallprodukte.

Für platzsparende Anordnungen werden daher meist trennende Schutzeinrichtungen gegenüber den berührungslos wirkenden Schutzeinrichtungen bevorzugt. Bei bewegten (kraftbetriebenen) trennenden Schutzeinrichtungen besteht eine der Herausforderungen insbesondere in der Wahl eines Antriebs zur Bewegung der Schutzabdeckung.

Vor diesem Hintergrund ist es eine Aufgabe der vorliegenden Erfindung, eine trennende Schutzeinrichtung mit beweglicher Schutzabdeckung bereitzustellen, wobei der Antrieb zur Bewegung der Schutzabdeckung möglichst platzsparend ausgestaltet ist und energieeffizient betrieben werden kann.

Gemäß einem Aspekt der vorliegenden Erfindung wird diese Aufgabe durch eine trennende Schutzeinrichtung gemäß Anspruch 1 gelöst.

Die erfindungsgemäße Schutzeinrichtung zeichnet sich insbesondere dadurch aus, dass die Schutzabdeckung nicht nur mit Hilfe eines Antriebs, sondern auch mit zusätzlicher Unterstützung eines in entgegengesetzter Richtung beweglichen Gegengewichts bewegt wird. Das Gegengewicht ist mit Hilfe eines Verbindungselements mit der Schutzabdeckung verbunden. Das Verbindungselement wird durch ein oder mehrere Umlenkelemente in seiner Richtung umgelenkt. Hierdurch entsteht eine Bewegungskopplung zwischen Schutzabdeckung und Gegengewicht, gemäß derer die Schutzabdeckung und das Gegengewicht parallel zu ein und derselben Verfahrachse, jedoch in zueinander entgegengesetzten Richtungen beweglich sind.

Die Verfahrachse ist in der Praxis vorzugsweise in vertikaler Richtung ausgerichtet. Auf diese Weise wird die Wirkung des Gegengewichts optimal eingesetzt und der Kraftaufwand zur Bewegung der Schutzabdeckung minimiert.

Ein weiteres charakteristisches Merkmal der vorliegenden Erfindung ist darin zu sehen, dass der Antrieb an dem Gegengewicht angreift und nicht, wie bei derartigen Antrieben sonst üblich, direkt an der Schutzabdeckung angreift. Das Gegengewicht wird also nicht nur als reines Gegengewicht eingesetzt, sondern fungiert auch als Krafteinleitungselement und somit als Teil des Antriebsstrangs zum Antrieb der Schutzabdeckung. Der Antrieb kann daher relativ weit entfernt und an einer mehr oder weniger beliebigen Stelle angeordnet sein. Durch diese variable Anordnungsmöglichkeit des Antriebs lässt sich der Gesamtplatzbedarf, den die trennende Schutzeinrichtung einnimmt, reduzieren.

Die erfindungsgemäße Schutzeinrichtung ermöglicht somit einen relativ kompakten Aufbau bei gleichzeitiger Realisierung eines energieeffizienten Antriebskonzepts zur Bewegung der beweglichen Schutzabdeckung.

Als Umlenkelement im Sinne der vorliegenden Erfindung kann beispielsweise eine Umlenkrolle, ein Zahnrad, eine Welle oder ein Getriebe verwendet werden.

Erfindungsgemäß weist das Verbindungselement ein erstes Seil auf, dessen Enden miteinander verbunden sind, als auch ein zweites Seil auf, dessen Enden miteinander verbunden sind, wobei das Umlenkelement zwei erste Umlenkrollen zur Umlenkung des ersten Seils sowie zwei zweite Umlenkrollen zur Umlenkung des zweiten Seils aufweist, und wobei das erste Seil und das zweite Seil voneinander beabstandet sind, parallel zueinander verlaufen und jeweils separat mit dem Gegengewicht und der Schutzabdeckung verbunden sind.

Die beiden Umlenkrollen jedes Seils bilden gemeinsam mit dem Seil einen Seilzug mit einem (360°-) umlaufenden Seil. Die beiden Umlenkrollen jedes Seils sind vorzugsweise parallel zueinander und voneinander beabstandet angeordnet.

Beide Umlenkrollen jedes Seils sind als feste Rollen ausgebildet. Feste Rollen eines Seilzugs verändern ihre Position während der Benutzung nicht. Nichtsdestotrotz ist vorzugsweise zumindest eine der Rollen zur Spannung des Seils (vor oder nach Benutzung) in ihrer Position veränderbar.

Ein solcher Seilzug mit zwei festen Rollen und einem umlaufenden Seil, dessen Enden miteinander verbunden sind, hat in der vorliegenden Anwendung den Vorteil, dass sich das Gegengewicht zum Öffnen und Schließen der Schutzabdeckung in beide Richtungen aktiv durch den Antrieb bewegen lässt. Da der Seilzug einen geschlossenen Kreislauf bildet, können über das Seil in beide entgegengesetzte Richtungen entlang des Seils Zugkräfte zum Öffnen wie auch zum Schließen der Schutzabdeckung übertragen werden.

Anstelle von zwei Umlenkrollen pro Seilzug sind in einer bevorzugten Ausgestaltung vier Umlenkrollen pro Seilzug vorgesehen. In diesem Fall wird das Seil an jeder Umlenkrolle nicht um 180°, sondern um 90° umgelenkt. Dies bietet unter anderem die Möglichkeit, das Gegengewicht und die Schutzabdeckung noch weiter voneinander zu entfernen und entsprechend Platz für den Antrieb vorzusehen.

Die Verwendung von zwei separaten Seilzügen, welche getrennt voneinander an dem Gegengewicht und der Schutzabdeckung angreifen, bietet mehrere Vorteile: zum einen ist dadurch Redundanz geschaffen. Der Bruch eines Seils führt somit nicht dazu, dass die Schutzabdeckung ungebremst herunterfällt und möglicherweise den Bediener des Systems verletzt. Zum anderen kann die Kraft besser verteilt werden. Ein weiterer wichtiger Vorteil besteht darin, dass es bei Bruch eines Seils üblicherweise zu einem Verkanten der Schutzabdeckung kommt, da die Schutzabdeckung aufgrund der separaten, voneinander beabstandeten Anordnung beider Seile verkippt. Dies dient als eindeutiger Hinweis für den Bediener, dass eine Funktionsstörung vorliegt und eventuell ein Seil ausgetauscht werden muss. Die Gefahr, dass der Bruch eines Seils für den Bediener unbemerkt bleibt und es in der Folge auch zu einem Bruch des zweiten Seils kommen kann, ist dadurch minimiert.

Gemäß einer weiteren Ausgestaltung weist die Schutzeinrichtung ferner zwei parallel zueinander angeordnete, voneinander beabstandete Linearführungen auf, in denen die Schutzabdeckung geführt ist.

Dies ermöglicht eine stabile und reibungsarme Führung. Querkräfte, welche im Falle einer Ausgestaltung des Verbindungselements als Seil von dem Verbindungselement nicht aufgenommen werden können, werden durch die Linearführungen kompensiert. Hierzu lassen sich unterschiedlichste Arten von Linearführungen mit Wälzkörpern oder Gleitlagern verwenden.

Gemäß einer Ausgestaltung haben das erste Seil und das zweite Seil einen gleich großen Abstand von einer Mittelebene, welche die Schutzabdeckung in zwei gleich große Hälften teilt. Vorzugsweise haben auch die beiden parallel zueinander angeordneten Linearführungen jeweils den gleichen Abstand von dieser Mittelebene.

Durch die symmetrische Anordnung der beiden Seilzüge lässt sich eine optimale Kraftverteilung realisieren. Während des Normalbetriebs ist die Gefahr eines Verkantens der Schutzabdeckung innerhalb der Linearführung weitestgehend minimiert.

Erfindungsgemäß greift der Antrieb an einem Krafteinleitungspunkt an dem Gegengewicht an, welcher einen gleich großen Abstand von dem ersten und dem zweiten Seil und/oder einen gleich großen Abstand von den beiden Linearführungen hat.

Die Antriebskraft wird also zentrisch in das Gegengewicht eingeleitet. Somit wird die eingeleitete Antriebskraft symmetrisch in die beiden Seile eingeleitet, wodurch diese gleichermaßen belastet werden.

Gemäß einer weiteren Ausgestaltung der vorliegenden Erfindung ist der Antrieb über eine magnetische Kopplung mit dem Gegengewicht verbunden.

Diese magnetische Kopplung dient als Sicherheitsfunktion zur Minimierung der Gefahr für den Bediener beim Schließen der Schutzabdeckung. Beim Schließen der Schutzabdeckung wird die Schutzabdeckung vorzugsweise vertikal nach unten bewegt. Das Gegengewicht wird in entgegengesetzter Richtung vom Antrieb vertikal nach oben gezogen. Die magnetische Kopplung zwischen Gegengewicht und Antrieb wird dabei auf Zug belastet. Wird die Schließbewegung der Schutzabdeckung, beispielsweise durch ein Hindernis, blockiert, reißt die magnetische Kopplung ab. Damit ist die Schutzabdeckung von dem Antrieb unterbrochen.

Vorzugsweise weist die magnetische Kopplung einen Permanentmagneten auf. Durch geeignete Auswahl (Material, Größe und/oder Form) des Permanentmagneten lässt sich die Abrisskraft der Kopplung, bei der die Schutzabdeckung von dem Antrieb getrennt wird, vorab definieren.

Gemäß einer bevorzugten Ausgestaltung ist der Permanentmagnet schwimmend gelagert.

Dies stellt sicher, dass der Antrieb plan an dem Permanentmagneten angreift, um einerseits ein Verkippen innerhalb des Systems zu vermeiden und andererseits die Abrisskraft möglichst genau zu übertragen. Der Permanentmagnet wird vorzugsweise mit Hilfe eines O-Rings schwimmend gelagert.

Gemäß einer weiteren bevorzugten Ausgestaltung weist der Antrieb einen Linearantrieb auf. Unterschiedlichsten Arten von Linearantrieben kommen für diese Anwendung in Betracht, beispielsweise ein Kugelgewindetrieb, ein Rollengewindetrieb, ein Hydraulik- oder Pneumatikzylinder, ein Spindelantrieb oder ein Linearmotor.

In einer bevorzugten Ausgestaltung wird ein Linearmotor als Linearantrieb verwendet, wobei der Linearmotor einen Hall-Sensor aufweist. Der integrierte Hall-Sensor hat den Vorteil, dass dieser als Messsensor fungieren kann, wodurch die Auslenkung des Läufers des Linearmotors und damit auch die Position der Schutzabdeckung sehr exakt messbar sind.

In einer weiteren Ausgestaltung weist der Linearantrieb einen translatorisch bewegten Läufer auf, wobei der Läufer und das Gegengewicht in Summe ein Eigengewicht haben, welches sich maximal 10 % von einem Eigengewicht der Schutzabdeckung unterscheidet. Vorzugsweise ist das Eigengewicht des Läufers und des Gegengewichts so gewählt, dass diese in Summe exakt gleich schwer sind wie die Schutzabdeckung.

Dies hat den Vorteil, dass der Kraftaufwand zum Antreiben der Schutzabdeckung minimiert wird. Bei einem Kräftegleichgewicht der Gewichtskräfte von Läufer/Gegengewicht und Schutzabdeckung muss von dem Antrieb lediglich Kraft für einen Beschleunigungs- oder Abbremsvorgang aufgewandt werden. Zur Aufrechterhaltung einer gleichförmigen Bewegung müssen lediglich die vernachlässigbaren Reibungs- und Lagerkräfte ausgeglichen werden.

Die Schutzabdeckung weist gemäß einer bevorzugten Ausgestaltung der Erfindung eine durchsichtige Haube auf. Der Arbeitsbereich der Maschine ist somit auch in geschlossenem Zustand der Schutzabdeckung für den Bediener einsehbar.

Grundsätzlich kann die Schutzabdeckung aus einem Sicherheitsglas ausgestaltet werden. Aus Gewichtsgründen ist jedoch eine Schutzabdeckung aus Kunststoff, vorzugsweise aus einem Polycarbonat wie Makrolon bevorzugt.

In einer weiteren bevorzugten Ausgestaltung hat die Schutzabdeckung einen im Wesentlichen U-förmigen Querschnitt. Der Arbeitsbereich der abzusichernden Maschine ist somit bei geschlossener Schutzabdeckung von mehreren Seiten einsehbar und bei geöffneter Schutzabdeckung von mehreren Seiten zugänglich.

Ausführungsbeispiele der Erfindung sind in den Zeichnungen dargestellt und werden in der nachfolgenden Beschreibung näher erläutert. Es zeigen:
- Fig. 1: eine schematische Darstellung einer Elektropresse mit einer trennenden Schutzeinrichtung gemäß der vorliegenden Erfindung;
- Fig. 2: eine Prinzipskizze der trennenden Schutzeinrichtung gemäß der vorliegenden Erfindung;
- Fig. 3: eine perspektivische Ansicht eines Ausführungsbeispiels der trennenden Schutzeinrichtung gemäß der vorliegenden Erfindung;
- Fig. 4: eine perspektivische Ansicht des in Fig. 3 gezeigten Ausführungsbeispiels von einer ersten Seite, wobei mehrere Seitenwände der trennenden Schutzeinrichtung weggelassen sind;
- Fig. 5: eine perspektivische Ansicht des in Fig. 3 gezeigten Ausführungsbeispiels von einer gegenüberliegenden zweiten Seite, wobei mehrere Seitenwände der trennenden Schutzeinrichtung weggelassen sind;
- Fig. 6: eine perspektivische Ansicht des in Fig. 3 gezeigten Ausführungsbeispiels von schräg hinten, wobei mehrere Seitenwände der trennenden Schutzeinrichtung weggelassen sind;
- Fig. 7: ein Detail aus Fig. 6;
- Fig. 8: ein weiteres Detail aus Fig. 6;
- Fig. 9: ein weiteres Detail aus Fig. 6 in einer Draufsicht dargestellt;
- Fig. 10: ein Detail aus Fig. 1 in einer perspektivischen Ansicht von schräg oben, wobei Verkleidungsteile der Schutzeinrichtung weggelassen sind;
- Fig. 11: eine Detailansicht einer in der erfindungsgemäßen Schutzeinrichtung verwendbaren ersten Verriegelungseinrichtung;
- Fig. 12: eine Detailansicht einer in der erfindungsgemäßen Schutzeinrichtung verwendbaren zweiten Verriegelungseinrichtung;
- Fig. 13: eine weitere Detailansicht der in Fig. 12 gezeigten zweiten Verriegelungseinrichtung; und
- Fig. 14: eine Schnittansicht der in Fig. 12 und 13 gezeigten zweiten Verriegelungseinrichtung.

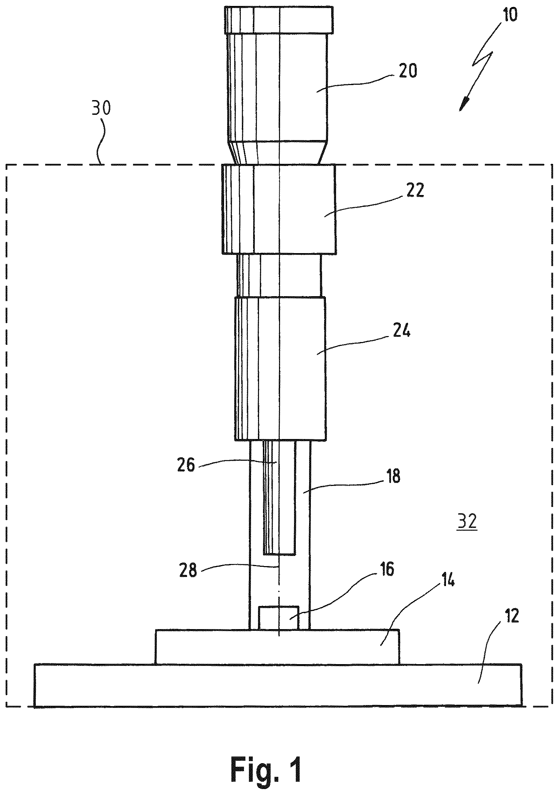

In Fig. 1 ist eine Presse als Beispiel für eine gefährliche Maschine, die mit der erfindungsgemäßen trennenden Schutzeinrichtung abgesichert werden kann, schematisch gezeigt. Die Presse ist darin gesamthaft mit der Bezugsziffer 10 bezeichnet. Beispielsweise kann es sich bei der Presse 10 um eine Elektropresse handeln, welche als Fügepresse eingesetzt wird. Eine solche Presse ist beispielhaft in der deutschen Patentschrift DE 103 33 416 B3 beschrieben.

Die Presse 10 besitzt eine Grundplatte 12, auf der sich ein Werkstückhalter 14 mit einem zu bearbeitenden Werkstück 16 befindet. Von der Grundplatte 12 ragt eine Säule 18 nach oben. Am oberen Ende der Säule 18 befindet sich ein elektrischer Antriebsmotor 20, darunter ein Drehmomentwandler 22 und darunter eine Spindel 24. Aus der Spindel 24 ragt ein Pressenstößel 26 nach unten heraus, der mit Hilfe des Antriebsmotors 20, des Drehmomentwandlers 22 und der Spindel 24 entlang einer vertikalen Achse 28 bewegt werden kann, um das Werkstück 16 zu bearbeiten.

Mit der Bezugsziffer 30 ist eine in Fig. 1 nur schematisch angedeutete trennende Schutzeinrichtung bezeichnet, die gemäß den Grundzügen der vorliegenden Erfindung realisiert ist und die anhand der nachfolgenden Figuren in einem bevorzugten Ausführungsbeispiel beschrieben wird.

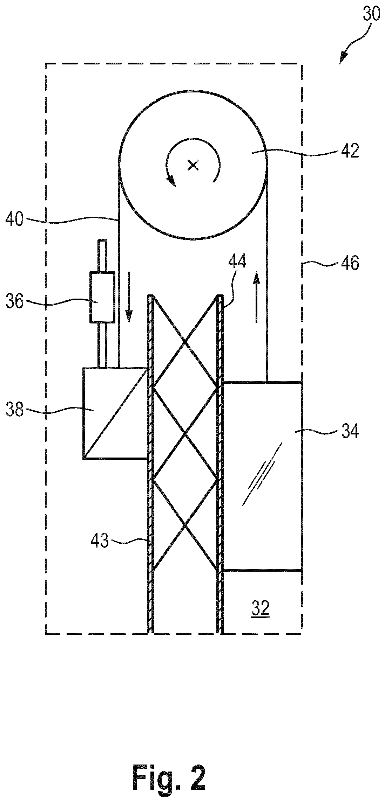

Fig. 2 zeigt eine Prinzipskizze der erfindungsgemäßen trennenden Schutzeinrichtung 30. Die trennende Schutzeinrichtung 30 ist vorzugsweise eine Kombination aus einer feststehenden trennenden Schutzeinrichtung sowie einer bewegten (kraftbetriebenen) trennenden Schutzeinrichtung. Die Schutzeinrichtung 30 dient der Absicherung eines Arbeitsbereichs 32, um zu verhindern, dass eine Person, beispielsweise der Bediener der Maschine, während des Betriebs in den Arbeitsbereich 32 eingreift und sich dabei Verletzungen zufügt.

Die Schutzeinrichtung 30 weist eine Schutzabdeckung 34 zur Abdeckung zumindest eines Teils des Arbeitsbereichs 32 auf. Diese Schutzabdeckung 34 ist vorzugsweise als Haube, kann jedoch auch als Türe, Platte, Gitter oder sonstiges Verkleidungsteil ausgestaltet sein. Die Schutzabdeckung 34 ist parallel zur vertikalen Achse 28 beweglich, um den Arbeitsbereich 32 wahlweise von außen zugänglich oder unzugänglich zu machen.

Die Öffnungs- bzw. Schließbewegung der Schutzabdeckung 34 wird durch einen Antrieb 36 bewirkt. Dieser Antrieb 36 ist vorzugsweise als Linearantrieb ausgestaltet. Der Antrieb 36 treibt ein Gegengewicht 38 an, welches mit der Schutzabdeckung 34 über ein Verbindungselement 40 und ein Umlenkelement 42 bewegungsgekoppelt ist. Der Antrieb 36 greift also nicht an der Schutzabdeckung 34 direkt an, sondern stattdessen an dem entgegengesetzt zu der Schutzabdeckung 34 bewegten Gegengewicht 38.

Gemäß einem bevorzugten Ausführungsbeispiel ist das Verbindungselement 40 als Seil und das Umlenkelement 42 als Umlenkrolle ausgestaltet, so dass das Verbindungselement 40 und das Umlenkelement 42 gemeinsam einen Seilzug bilden. Anstelle eines Seilzugs können die beiden Bauteile 40, 42 jedoch auch als Riementrieb, Kettenzug oder dergleichen ausgestaltet sein. Ebenso können auch mehr als nur ein Verbindungselement 40 und ein Umlenkelement 42 vorgesehen sein.

Unabhängig von der konkreten Ausführung wird durch das Verbindungselement 40 und das Umlenkelement 42 eine Bewegungskopplung der Schutzabdeckung 34 mit dem Gegengewicht 38 realisiert, gemäß derer die Schutzabdeckung 34 und das Gegengewicht 38 parallel zu der vertikalen Achse 28 in entgegengesetzte Richtungen bewegt werden. Wird das Gegengewicht 38 vertikal nach unten verfahren, so wird die Schutzabdeckung 34 vertikal nach oben gezogen, und umgekehrt.

Zur Stabilisierung und Führung der Bewegung der Schutzabdeckung 34 weist die Schutzeinrichtung 30 ferner vorzugsweise eine Linearführung 44 auf. Diese Linearführung 44 umfasst vorzugsweise zumindest ein Wälzlager oder Gleitlager. Auch das Gegengewicht 38 kann an einer entsprechenden Führung 43 geführt sein.

Des Weiteren umfasst die trennende Schutzeinrichtung 30 mehrere feststehende bzw. unbewegte Verkleidungsbauteile, welche den Arbeitsbereich 32 der abzusichernden Maschine 10 umgeben und in Fig. 2 lediglich gestrichelt angedeutet und mit der Bezugsziffer 46 gekennzeichnet sind.

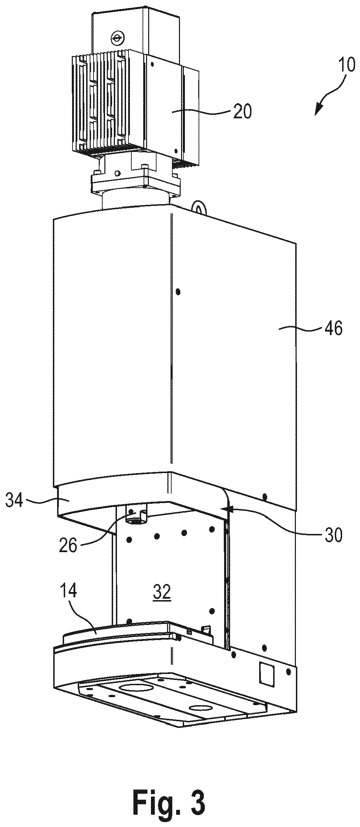

Fig. 3 zeigt ein Ausführungsbeispiel einer Elektropresse 10 mit der erfindungsgemäßen trennenden Schutzeinrichtung 30 in einer perspektivischen Ansicht. Die Schutzabdeckung 34 ist gemäß dieses Ausführungsbeispiels als eine U-förmige Haube ausgestaltet. Sie deckt den Arbeitsbereich 32 der Presse 10 somit nach drei Richtungen ab. Um den Arbeitsbereich 32 auch bei geschlossener Schutzabdeckung 34 einsehen zu können, ist die Schutzabdeckung 34 vorzugsweise aus einem durchsichtigen Material ausgestaltet. Hierfür eignet sich insbesondere Kunststoff, da Kunststoff im Vergleich zu Glas oder anderen Werkstoffen ein geringeres Gewicht hat.

Die Schutzabdeckung 34 wird vorzugsweise rein translatorisch bewegt. Während des Öffnens fährt die Schutzabdeckung 34 gemäß des in Fig. 3 gezeigten Ausführungsbeispiels in ein aus feststehenden Verkleidungsbauteilen 46 bestehendes Gehäuse ein. Beim Schließen fährt die Schutzabdeckung 34 in entsprechend entgegengesetzter Richtung vertikal nach unten aus, bis das untere Ende des Arbeitsbereichs 32 erreicht ist und der Werkstückhalter 14 vollständig umschlossen ist.

Die Schutzabdeckung 34 wird in dem gezeigten Ausführungsbeispiel mit Hilfe mehrere Gleitlager 48 an zwei vertikal verlaufenden Linearführungen 50 geführt. Die beiden Linearführungen 50 verlaufen parallel zueinander und sind auf gegenüberliegenden Seiten der Schutzabdeckung 34 angeordnet. Um die erforderliche Steifigkeit der Gleitlagerungen 48 zu gewährleisten, sind diese auf jeder Seite der Schutzabdeckung 34 mit Hilfe jeweils einer Verbindungsleiste 52 miteinander verbunden.

Der Antrieb der Schutzabdeckung 34 erfolgt über einen Servomotor, welcher in dem vorliegenden Ausführungsbeispiel als Linearmotor 54 mit einem Stator 56 und einem Läufer 58 ausgeführt ist. Der Läufer 58 des Linearmotors 54 greift an dem Gegengewicht 38 an. Als Verbindungselement 40 zur Verbindung der Schutzabdeckung 34 mit dem Gegengewicht 38 fungieren in diesem Ausführungsbeispiel zwei Seile 60, 62. Die beiden Seile 60, 62 sind auf gegenüberliegenden Seiten der Schutzeinrichtung 30 angeordnet und verlaufen parallel zueinander.

Beide Seile 60, 62 sind umlaufende Seile, welche einen geschlossenen Kreislauf bilden. Jedes der beiden Seile 60, 62 wird in dem vorliegenden Ausführungsbeispiel über jeweils vier Umlenkrollen 64, 66 umgelenkt. Alle acht Umlenkrollen 64, 66 sind feste Rollen, welche während des Betriebs nicht bewegt werden. Die beiden oberen Umlenkrollen 64, 66 jedes Seilzugs können allerdings vertikal verschoben werden, um die Seile 60, 62 zu spannen.

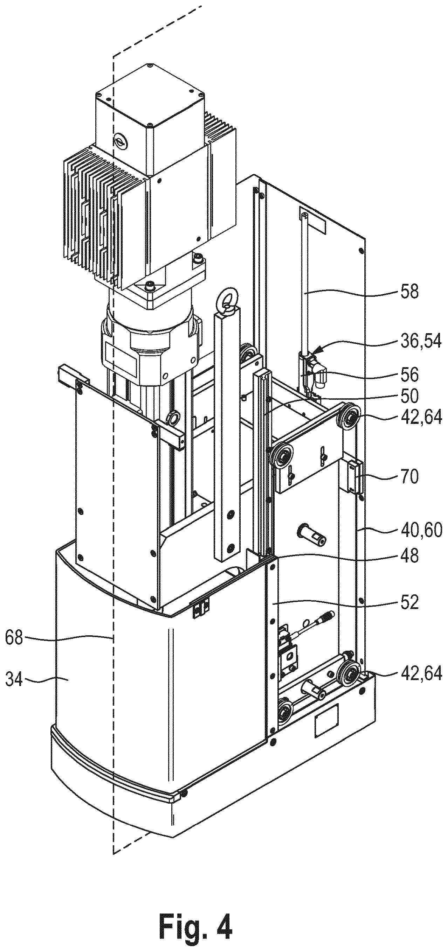

Um eine symmetrische Kraftverteilung zu erreichen, ist jedes der beiden Seile 60, 62 in einem gleichen Abstand zu einer imaginären Mittelebene 68 angeordnet, welche die Schutzabdeckung 34 in zwei gleich große, identische Hälften teilt und parallel zur vertikalen Richtung 28 verläuft. Diese Mittelebene 68 ist in Fig. 4 gestrichelt angedeutet. Die Krafteinleitung des Linearmotors 54 erfolgt zentrisch am Gegengewicht 38 in dieser Mittelebene 68. Somit wird die eingeleitete Antriebskraft symmetrisch in die beiden Seile 60, 62 eingeleitet. Dies wiederum gewährleistet eine gleichmäßige Bewegung der Schutzabdeckung 34 ohne Verkanten.

Jedes der beiden Seile 60, 62 weist vorzugsweise ein Edelstahlseil mit einer Kunststoffummantelung auf. Durch die Kunststoffummantelung wird der Verschleiß an den Umlenkrollen 64, 66 auf ein Minimum reduziert.

Die beiden Seile 60, 62 sind jeweils separat, also unabhängig voneinander, jeweils einerseits mit dem Gegengewicht 38 und andererseits mit der Schutzabdeckung 34 verbunden. Die Verbindungen sind vorzugsweise über Spannpratzen 70 oder Schnellspanner 72 realisiert.

Der Einsatz von zwei Seilen 60, 62 verhindert beim Bruch eines Seils 60, 62 das Herunterfallen der Schutzabdeckung 34. Zudem führt der Bruch eines Seils 60, 62 dazu, dass die Öffnungs- bzw. Schließfunktion der Schutzabdeckung nicht mehr ausgeführt werden kann, da die Schutzabdeckung 34 in den Linearführungen 50 verkantet. Diese Situation stellt jedoch keinerlei Gefahr für den Bediener dar, da der Betrieb der Maschine bzw. Presse 10 bei geöffneter Schutzabdeckung 34 nicht ausgelöst werden kann. Der Bediener kann aufgrund des Verkantens der Schutzabdeckung 34 erkennen, dass eines der beiden Seile 60, 62 gerissen sein muss und kann für einen Ersatz dessen sorgen. Die Verwendung zweier Seile 60, 62 dient somit nicht nur der Redundanz, sondern ermöglicht auch eine leichte Erkennung einer Fehlfunktion bei Bruch eines Seils.

Der Stator 56 des Linearantriebs 54 umfasst vorzugsweise mehrere Spulen sowie einen Hall-Sensor 74. Der Läufer 58 des Linearantriebs 54 weist beispielsweise ein Edelstahlrohr sowie eine Vielzahl von Permanentmagneten auf. Werden die Spulen des Stators 56 mit Hilfe eines Umrichters angesteuert, so bewegt sich der Läufer 58. Die Auswertung des Hall-Sensors 74 entspricht einem Messsystem. Der Läufer 58 kann daher sehr exakt positioniert werden.

Die freie Länge des Linearmotors 54 bzw. die Länge des Läufers 58 entspricht dem Öffnungshub der Schutzabdeckung 34. Der Linearmotor 54 ist vorzugsweise parallel zur vertikalen Achse 28 verbaut. Der Läufe 58 verläuft also parallel zu den Linearführungen 50. Während des Betriebs drückt der Läufer 58 zentrisch auf das Gegengewicht 38. Vorzugsweise entspricht das Gegengewicht 38 und das Eigengewicht des Läufers 58 in Summe dem Gewicht der Schutzabdeckung 34. Dies hat zur Folge, dass die Schutzabdeckung 34 an jeder Position kraftlos stehen bleibt. Im Stillstand benötigt der Linearmotor 54 somit keinen Strom, um die Schutzabdeckung 34 in ihrer Position zu halten. Lediglich für das Beschleunigen und für die konstante Verfahrgeschwindigkeit wird elektrische Energie benötigt. Dies resultiert in einem sehr energieeffizienten Antriebssystem.

Durch die entgegengesetzte Bewegungskopplung der Schutzabdeckung 34 mit dem Gegengewicht 38 verfahren diese beiden Bauteile entgegengesetzt zueinander. Zum Öffnen der Schutzabdeckung 34 bewegt der Linearmotor 54 das Gegengewicht 38 nach unten. Um die Schutzabdeckung 34 zu schließen, muss der Linearmotor 54 das Gegengewicht 38 hingegen vertikal nach oben bewegen.

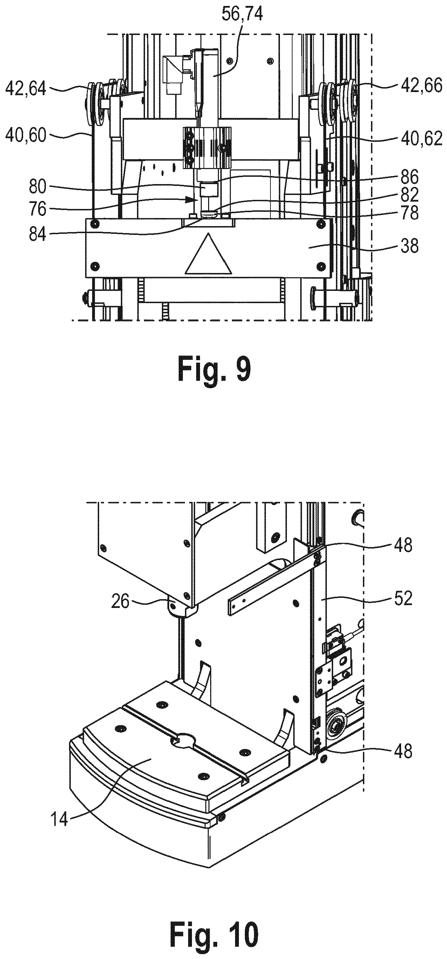

Der Linearmotor 54 ist mit dem Gegengewicht 38 vorzugsweise über eine magnetische Kopplung 76 verbunden (siehe Fig. 9). Diese magnetische Kopplung 76 weist einen Permanentmagneten 78 auf, welcher an dem Gegengewicht 38 vorzugsweise mittig angeordnet ist. Als Gegenstück zu dem Permanentmagneten 78 ist an der Stirnseite des Läufers 58 ein Mitnehmer 80 aus ferromagnetischem Material angeordnet.

Beim Schließen der Schutzabdeckung 34 wird die magnetische Kopplung 76 auf Zug belastet. Übersteigt die Zugkraft, mit der das Gegengewicht 38 vertikal nach oben gezogen wird, die Anzugskraft zwischen dem Permanentmagneten 78 und dem Mitnehmer 80, so wird die magnetische Kopplung 76 getrennt. Dies dient als Sicherheitsfunktion beim Schließen der Schutzabdeckung 34.

Da während des Schließens der Schutzabdeckung 34 mit einem ungewollten Eingriff gerechnet werden muss, muss verhindert werden, dass beispielsweise Körperteile des Bedieners zwischen der Schutzabdeckung 34 und dem Werkstückhalter 14 eingeklemmt werden. Für einen solchen Fall können erfindungsgemäß daher mehrere Sicherheitsfunktionen vorgesehen sein. Zum einen kann der Antrieb 36 bzw. 54 dazu eingerichtet sein, die Geschwindigkeit, mit der die Schutzabdeckung 34 geschlossen wird, um 50 % gegenüber deren Öffnungsgeschwindigkeit zu reduzieren. Hierdurch wird die kinetische Energie der Schutzabdeckung beim Schließen begrenzt. Weiterhin kann während der Schließbewegung der Schutzabdeckung 34 ständig der Motorstrom des Linearmotors 54 überwacht werden. Wird ein vorgegebenes Limit überschritten, zum Beispiel beim Versuch die Schutzabdeckung 34 von Hand anzuhalten, bleibt der Linearmotor 54 stehen. Als weitere Sicherheitsfunktion fungiert die magnetische Kopplung 76, welche vorzugsweise so ausgestaltet ist, dass es bei Überschreiten einer vordefinierten Kraft zum Abriss zwischen Permanentmagnet 78 und Mitnehmer 80 kommt.

Die Abrisskraft wird vorzugsweise durch geeignete Auswahl des Permanentmagneten 78 eingestellt. Eine zusätzliche Einstellungsmöglichkeit besteht darin, ein Distanzelement 82, zum Beispiel in Form einer Distanzfolie, an der Oberseite des Permanentmagneten 78 anzuordnen. Hierdurch wird ein definierter magnetischer Luftspalt erzeugt, durch den die Abrisskraft reduziert wird.

Um sicherzustellen, dass der an der Unterseite des Läufers 58 angeordnete Mitnehmer 80 plan auf dem Permanentmagneten 78 bzw. plan auf dem Distanzelement 82 aufliegt, wird der Permanentmagnet 78 vorzugsweise mit Hilfe eines O-Rings 84 schwimmend gelagert.

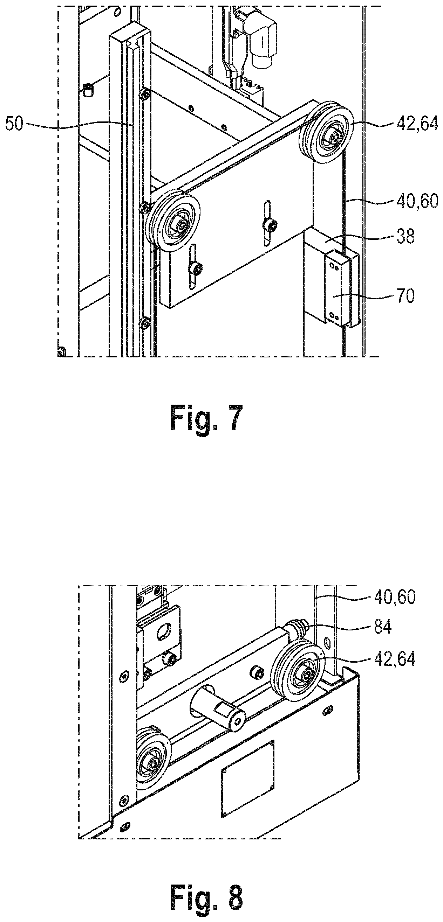

Die Bewegung der Schutzabdeckung 34 wird im Übrigen durch eine Wegbegrenzung des Gegengewichts 38 definiert. Zu diesem Zweck ist vorzugsweise ein unterer Endanschlag 84 (siehe Fig. 8) sowie ein oberer Endanschlag 86 (siehe Fig. 9) vorgesehen.

Der untere Endanschlag 84 weist beispielsweise zwei elastische Gummielemente auf, welche an dem Gestell der Schutzeinrichtung 30 angeordnet sind. Beispielsweise können diese Gummielemente beidseitig an den Querstreben angeordnet sein, an denen auch die unteren Umlenkrollen 64, 66 der beiden Seilzüge angeordnet sind. Über diesen unteren Anschlag 84 wird die obere (geöffnete) Endstellung der Schutzabdeckung 34 begrenzt.

Die untere Schließposition der Schutzabdeckung 34 wird hingegen durch den oberen Endanschlag 86 begrenzt, welcher vorzugsweise am Mitnehmer 80 des Läufers 58 des Linearmotors 54 angeordnet ist. Beispielsweise kann ein O-Ring als oberer Endanschlag 86 verwendet werden, der sich in der Endlage gegen den Stator 56 des Linearmotors 54 abstützt. Dieser obere Endanschlag 86 dient auch als Anschlag für die Referenzfahrt des Linearmotors 54.

Der Linearmotor 54 weist vorzugsweise Gleitführungen auf, welche parallel zu der vertikalen Achse 28 verlaufen. Da die Seile 60, 62 eine ausreichend hohe Führungseigenschaft aufweisen und zum anderen in einem gewissen Maß flexibel sind, werden Fluchtungsfehler automatisch ausgeglichen. Die Gleitführungen des Linearmotors 54 werden daher nur minimal belastet. Nichtsdestotrotz weist der Linearmotor 54 vorzugsweise Einstellelemente auf, mittels derer sich der Kraftangriffspunkt am Gegengewicht 38 ausrichten lässt. Diese Einstellelemente können beispielsweise Nivellierschrauben aufweisen, die am Stator 56 angeordnet sind. Zudem können am Stator Langlöcher vorgesehen sein. Über diese Nivellierschrauben sowie die Langlöcher kann der Stator 56 mit dem Mitnehmer 80 exakt in die Führungsflucht des Gegengewichts 38 über den gesamten Hubbereich des Gegengewichts 38 eingestellt werden.

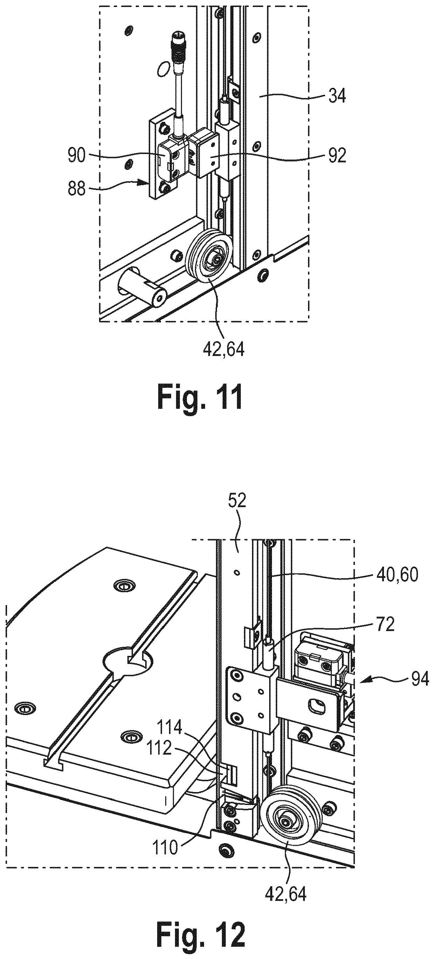

Die Fig. 11-14 zeigen Details weiterer Sicherheitssysteme der trennenden Schutzeinrichtung 30. Eine kraftbetriebene, bewegliche trennende Schutzeinrichtung muss nach DIN EN ISO 14120 mit Sicherheitsschaltern ausgestattet sein. Beispielsweise muss gewährleistet sein, dass die abzusichernde Maschine 10 nicht in Gang gesetzt werden kann, solange die Schutzabdeckung 34 geöffnet ist. Dies wird häufig auch als Startfunktion bezeichnet. Des Weiteren muss gewährleistet sein, dass sich die Schutzabdeckung 34 während des Betriebs der abzusichernden Maschine 10 nicht öffnen lässt.

Erfindungsgemäß weist die Schutzeinrichtung 30 zu oben genannten Zwecken einen ersten Sicherheitsschalter 88 auf (siehe Fig. 11). Dieser Sicherheitsschalter basiert auf berührungsloser RFID-Technologie. Der erste Sicherheitsschalter 88 weist ein erstes Schaltelement 90 sowie einen ersten Betätiger 92 auf. Der erste Betätiger 92 ist fix mit der Schutzabdeckung 34 verbunden. In der geschlossenen Position der Schutzabdeckung 34 wird das erste Schaltelement 90 durch den ersten Betätiger 92 aktiviert. Erst dann kann die abzusichernde Maschine 10 gestartet werden.

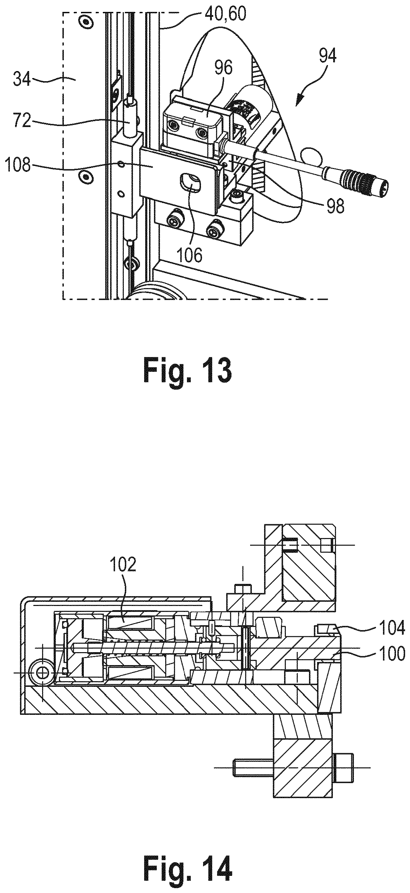

Ein zweiter Sicherheitsschalter 94 ist auf der gegenüberliegenden Seite der Schutzabdeckung 34 angeordnet (siehe Fig. 12 und 13). Dieser zweite Sicherheitsschalter 94 dient der Zuhaltung der Schutzabdeckung 34 während des Betriebs der abzusichernden Maschine 10. Auch dieser zweite Sicherheitsschalter 94 weist ein Schaltelement 96 und einen Betätiger 98 auf, welcher vorliegend als zweites Schaltelement 96 und als zweiter Betätiger 98 bezeichnet werden. Ferner weist der zweite Sicherheitsschalter 94 einen linear beweglichen Stößel 100 auf, welcher insbesondere in der Schnittansicht in Fig. 14 ersichtlich ist. Der Stößel 100 wird mit Hilfe eines bistabilen Hubmagneten 102 bewegt. Führungsbuchsen 104 führen den Stößel 100 seitlich, um hohe Seitenkräfte aufnehmen zu können. Bei Aktivierung durch den zweiten Betätiger 98 steuert das Schaltelement 96 den Hubmagneten 102 an, um den Stößel 100 auszufahren. In ausgefahrenem Zustand taucht der Stößel 100 in eine Bohrung 106 eines Verriegelungsblechs 108 ein (siehe Fig. 13). Das Verriegelungsblech 108 ist fix mit der Schutzabdeckung 34 verbunden. Der zweite Betätiger 98, welcher vorzugsweise ebenfalls auf RFID-Technologie basiert, detektiert die Position "Stößel ausgefahren". Ist der Stößel 100 ausgefahren, kann die Schutzabdeckung 34 maximal 2 mm nach oben bewegt werden, da das Verriegelungsblech 108 durch den Stößel 100 blockiert wird. Während des Betriebs der abzusichernden Maschine 10 wird die Schutzabdeckung 34 somit sicher zugehalten. Erst wenn der Betrieb der abzusichernden Maschine 10 unterbrochen bzw. beendet ist, wird der Stößel 100 mit Hilfe des Hubmagneten 102 wieder eingefahren, so dass die Schutzabdeckung 34 wieder freigegeben wird und mittels des Linearmotors 54 wieder geöffnet werden kann.

Die beiden Sicherheitsschalter 88, 94 sind vorzugsweise in einer Kaskadenschaltung miteinander geschalten. Dies bedeutet, dass der Hubmagnet 102 erst aktiviert werden kann, wenn der erste Sicherheitsschalter 1 detektiert, dass die Haube geschlossen ist.

Des Weiteren können diverse Merkmale vorgesehen sein, um den Wirkungsgrad der trennenden Schutzeinrichtung 30 zu verbessern. Beispielsweise können in den Gleitlagern 48 der Schutzabdeckung 34 Filzelemente 114 verbaut werden (siehe Fig. 12). Diese Filzelemente 114 gleiten an den Gleitflächen der Linearführungen 50. Die Filzelemente 114 werden mit einem Schmierstoff getränkt und benetzen somit die Gleitflächen der Linearführungen 50 mit einem Schmierfilm. Da die Filzelemente 114 über ein großes Aufnahmevermögen verfügen, ist ein Langzeitschmierdepot sichergestellt.

Um elektrostatische Aufladungen abzuleiten, kann die Schutzabdeckung 34 mit einer Antistatik-Beschichtung versehen werden. Weiterhin können in den Verbindungsleisten 52 der Schutzabdeckung 34 Antistatik-Bürsten 110 eingebaut werden (siehe Fig. 12). Um die elektrostatischen Ladungen effizient abzuleiten, ist an der Hinterseite des Arbeitsbereichs 32 ein Verkleidungsblech 112 angeordnet. Das Verkleidungsblech 112 kann beispielsweise aus Edelstahl sein. Dieses Verkleidungsblech 112 hat einerseits die Aufgabe, einen Eingriff in den Arbeitsbereich 32 von hinten zu vermeiden. Andererseits dient das Verkleidungsblech 112 als Gleitfläche für die Antistatik-Bürsten 110, so dass die elektrostatischen Ladungen in das geerdete Gestell der abzusichernden Maschine 10 abgeführt werden können.

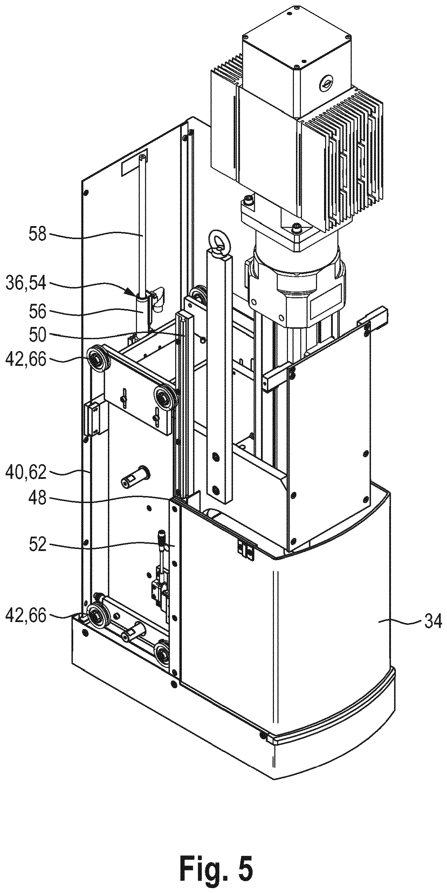

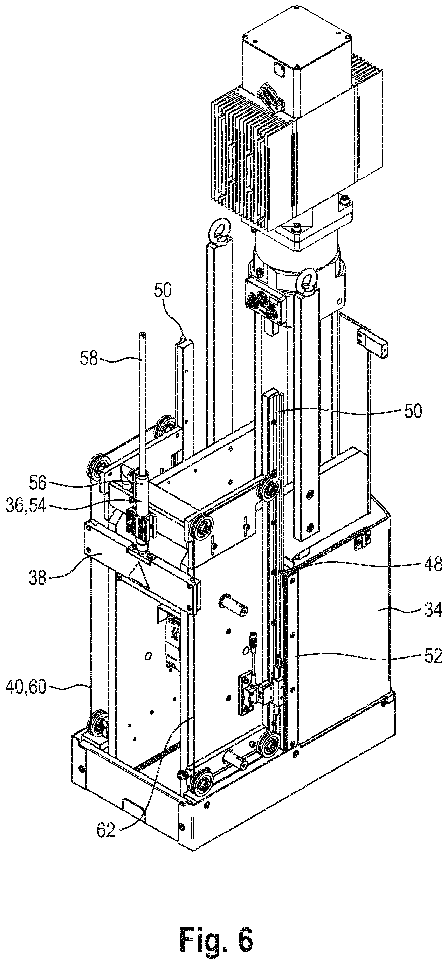

Abschließend sei darauf hingewiesen, dass in Fig. 4-13 diverse Verkleidungselemente der trennenden Schutzeinrichtung 30 weggelassen sind, welche in der Praxis als feststehende trennende Schutzeinrichtungen fungieren und einen Zugriff auf die inneren Bauteile der Schutzeinrichtung 30 und der abzusichernden Maschine als physische Barrieren verhindern. Damit werden Gefahrenstellen, welche beispielsweise durch den bewegten Läufer 58 des Linearmotors 54, die bewegten Seile 60, 62 und Umlenkrollen 64,66 entstehen, effektiv eliminiert.

Auf der Rückseite der Schutzeinrichtung 30 kann ein abnehmbares Verkleidungselement oder eine Tür vorgesehen sein, um Wartungsarbeiten an den zuvor genannten Elementen durchzuführen. Auch die elektrischen Komponenten (zum Beispiel Schaltnetzteil, Umrichter, Optokopplerkarte etc.) sowohl für die Ansteuerung des Linearmotors 54 als auch für die Ansteuerung des Hubmagneten 102 werden vorzugsweise innerhalb des Gehäuses 46 der Schutzeinrichtung 30 untergebracht.

Zusammenfassend lässt sich also feststellen, dass durch die erfindungsgemäße trennende Schutzeinrichtung 30 ein effektiver Arbeitsschutz erreicht wird. Das Antriebskonzept ist sehr energieeffizient und platzsparend ausgestaltet. Der Antrieb ist zudem relativ geräuscharm. Aufgrund der Verwendung einfacher mechanischer Komponenten lässt sich die Schutzeinrichtung 30 relativ kostengünstig herstellen.

## Patentansprüche

1. Trennende Schutzeinrichtung (30) zum Absichern einer gefährlichen Maschine (10), aufweisend:
- eine Schutzabdeckung (34) zur Abdeckung eines Arbeitsbereichs (32) der Maschine (10);
- ein Gegengewicht (38);
- ein Verbindungselement (40) zur Verbindung der Schutzabdeckung (34) mit dem Gegengewicht (38);
- ein Umlenkelement (42), welches dazu eingerichtet ist, das Verbindungselement (40) derart umzulenken, dass die Schutzabdeckung (34) und das Gegengewicht (38) in zueinander entgegengesetzten Richtungen beweglich sind; und
- ein Antrieb (36) zur Bewegung der Schutzabdeckung (34), der an dem Gegengewicht (38) angreift, um das Gegengewicht (38) anzutreiben;
wobei das Verbindungselement (40) ein erstes Seil (60) aufweist, dessen Enden miteinander verbunden sind, und ein zweites Seil (62) aufweist, dessen Enden miteinander verbunden sind, wobei das Umlenkelement (42) zwei erste Umlenkrollen (64) zur Umlenkung des ersten Seils (60) sowie zwei zweite Umlenkrollen (66) zur Umlenkung des zweiten Seils (62) aufweist, und wobei das erste Seil (60) und das zweite Seil (62) voneinander beabstandet sind, parallel zueinander verlaufen und jeweils separat mit dem Gegengewicht (38) und der Schutzabdeckung (34) verbunden sind;
**dadurch gekennzeichnet, dass** Antrieb (36) an einem Krafteinleitungspunkt an dem Gegengewicht (38) angreift, welcher einen gleich großen Abstand von dem ersten und dem zweiten Seil (60, 62) hat.

2. Trennende Schutzeinrichtung nach Anspruch 1, wobei das Verbindungselement (40) ein Seil (60, 62) aufweist, dessen Enden miteinander verbunden sind, und wobei das Umlenkelement (42) zwei Umlenkrollen (64, 66) aufweist.

3. Trennende Schutzeinrichtung nach Anspruch 1 oder 2, wobei die Schutzeinrichtung (30) ferner zwei parallel zueinander angeordnete, voneinander beabstandete Linearführungen (50) aufweist, in denen die Schutzabdeckung (34) geführt ist.

4. Trennende Schutzeinrichtung nach einem der Ansprüche 1-3, wobei der Antrieb (36) über eine magnetische Kopplung (76) mit dem Gegengewicht (38) verbunden ist.

5. Trennende Schutzeinrichtung nach Anspruch 4, wobei die magnetische Kopplung (76) einen Permanentmagneten (78) aufweist.

6. Trennende Schutzeinrichtung nach Anspruch 5, wobei der Permanentmagnet (78) schwimmend gelagert ist.

7. Trennende Schutzeinrichtung nach einem der Ansprüche 1-6, wobei der Antrieb (36) einen Linearantrieb aufweist.

8. Trennende Schutzeinrichtung nach Anspruch 7, wobei der Linearantrieb einen Linearmotor (54) mit Hall-Sensor (74) aufweist.

9. Trennende Schutzeinrichtung nach Anspruch 7 oder 8, wobei der Linearantrieb einen translatorisch bewegten Läufer (58) aufweist, und wobei der Läufer (58) und das Gegengewicht (38) in Summe ein Eigengewicht haben, welches sich maximal 10% von einem Eigengewicht der Schutzabdeckung (34) unterscheidet.

10. Trennende Schutzeinrichtung nach einem der Ansprüche 1-9, wobei die Schutzabdeckung (34) eine dursichtige Haube aufweist.

11. Trennende Schutzeinrichtung nach einem der Ansprüche 1-10, wobei die Schutzabdeckung (34) einen im Wesentlichen U-förmigen Querschnitt hat.

12. Presse (10) mit einer trennenden Schutzeinrichtung (30) nach einem der Ansprüche 1-11.

## Claims

1. A guard (30) for safeguarding a dangerous machine (10), comprising:
- a protective cover (34) for covering a working area (32) of the machine (10);
- a counterweight (38);
- a connecting element (40) for connecting the protective cover (34) to the counterweight (38);
- a deflection element (42), which is configured to deflect the connecting element (40) in such a way that the protective cover (34) and the counterweight (38) are movable in mutually opposite directions; and
- a drive (36), which acts on the counterweight (38) in order to drive the counterweight (38),
wherein the connecting element (40) comprises a first cable (60), the ends of which are connected to each other, and a second cable (62), the ends of which are connected to each other, wherein the deflection element (42) comprises two first deflection pulleys (64) for deflecting the first cable (60) and two second deflection pulleys (66) for deflecting the second cable (62), and wherein the first cable (60) and the second cable (62) are spaced apart, run parallel to each other and are each connected separately to the counterweight (38) and the protective cover (34),
**characterized in that** the drive (36) acts on the counterweight (38) at a force input point which is arranged at a same distance from the first and the second cable (60, 62).

2. The guard as claimed in claim 1, wherein the connecting element (40) comprises a cable (60, 62), the ends of which are connected to each other, and wherein the deflection element (42) comprises two deflection pulleys (64, 66).

3. The guard as claimed in claim 1 or 2, wherein the guard (30) furthermore comprises two mutually spaced linear guides (50) which are arranged parallel to each other and in which the protective cover (34) is guided.

4. The guard as claimed in any one of claims 1-3, wherein the drive (36) is connected to the counterweight (38) by means of a magnetic coupling (76).

5. The guard as claimed in claim 4, wherein the magnetic coupling (76) comprises a permanent magnet (78).

6. The guard as claimed in claim 5, wherein the permanent magnet (78) is mounted in a floating manner.

7. The guard as claimed in any one of claims 1-6, wherein the drive (36) comprises a linear drive.

8. The guard as claimed in claim 7, wherein the linear drive comprises a linear motor (54) with a Hall-effect sensor (74).

9. The guard as claimed in claim 7 or 8, wherein the linear drive comprises a slider (58) which is moved in a translatory manner, and wherein the slider (58) and the counterweight (38) together have a total dead weight which differs by no more than 10% from a dead weight of the protective cover (34).

10. The guard as claimed in any one of claims 1-9, wherein the protective cover (34) comprises a transparent hood.

11. The guard as claimed in any one of claims 1-10, wherein the protective cover (34) has a substantially U-shaped cross section.

12. A press (10) comprising a guard (30) as claimed in any one of claims 1-11.

## Revendications

1. Dispositif de protection séparateur (30) pour sécuriser une machine dangereuse (10), présentant :
- un couvercle de protection (34) pour couvrir une zone de travail (32) de la machine (10) ;
- un contrepoids (38) ;
- un élément de liaison (40) pour relier le couvercle de protection (34) au contrepoids (38) ;
- un élément de renvoi (42), qui est adapté pour renvoyer l'élément de liaison (40) de telle sorte que le couvercle de protection (34) et le contrepoids (38) sont mobiles dans des directions mutuellement opposées ; et
- un entraînement (36) pour déplacer le couvercle de protection (34), qui agit sur le contrepoids (38) afin d'entraîner le contrepoids (38) ;
l'élément de liaison (40) présentant un premier câble (60) dont les extrémités sont reliées l'une à l'autre et un deuxième câble (62) dont les extrémités sont reliées l'une à l'autre, l'élément de renvoi (42) présentant deux premières poulies de renvoi (64) pour renvoyer le premier câble (60) ainsi que deux deuxièmes poulies de renvoi (66) pour renvoyer le deuxième câble (62), et le premier câble (60) et le deuxième câble (62) étant espacés l'un de l'autre, s'étendant parallèlement l'un à l'autre et étant chacun reliés séparément au contrepoids (38) et au couvercle de protection (34) ; **caractérisé en ce que** l'entraînement (36) agit sur le contrepoids (38) au niveau d'un point d'application de force qui est à une même distance du premier et du deuxième câble (60, 62).

2. Dispositif de protection séparateur selon la revendication 1, dans lequel l'élément de liaison (40) présente un câble (60, 62) dont les extrémités sont reliées l'une à l'autre, et dans lequel l'élément de renvoi (42) présente deux poulies de renvoi (64, 66).

3. Dispositif de protection séparateur selon la revendication 1 ou 2, dans lequel le dispositif de protection (30) présente en outre deux guides linéaires (50) agencés parallèlement l'un à l'autre, espacés l'un de l'autre, dans lesquels le couvercle de protection (34) est guidé.

4. Dispositif de protection séparateur selon l'une quelconque des revendications 1 à 3, dans lequel l'entraînement (36) est relié au contrepoids (38) par le biais d'un couplage magnétique (76).

5. Dispositif de protection séparateur selon la revendication 4, dans lequel le couplage magnétique (76) présente un aimant permanent (78).

6. Dispositif de protection séparateur selon la revendication 5, dans lequel l'aimant permanent (78) est monté flottant.

7. Dispositif de protection séparateur selon l'une quelconque des revendications 1 à 6, dans lequel l'entraînement (36) présente un entraînement linéaire.

8. Dispositif de protection séparateur selon la revendication 7, dans lequel l'entrai-nement linéaire présente un moteur linéaire (54) avec capteur à effet Hall (74).

9. Dispositif de protection séparateur selon la revendication 7 ou 8, dans lequel l'entraînement linéaire présente un curseur (58) déplacé en translation, et dans lequel le curseur (58) et le contrepoids (38) ont au total un poids propre qui se différencie au maximum de 10 % d'un poids propre du couvercle de protection (34).

10. Dispositif de protection séparateur selon l'une quelconque des revendications 1 à 9, dans lequel le couvercle de protection (34) présente un capot transparent.

11. Dispositif de protection séparateur selon l'une quelconque des revendications 1 à 10, dans lequel le couvercle de protection (34) a une section transversale essentiellement en forme de U.

12. Presse (10) avec un dispositif de protection séparateur (30) selon l'une quelconque des revendications 1 à 11.
